# EUROPÄISCHE PATENTSCHRIFT

(11) **EP 2 164 735 B1**
(45) Veröffentlichungstag und Bekanntmachung des Hinweises auf die Patenterteilung: **27.06.2012**
(21) Anmeldenummer: 08774624.4
(22) Anmeldetag: 02.07.2008
(51) Int. Cl.: B60T 13/66, B60T 7/12

(54) **VERFAHREN UND ANORDNUNG ZUM FAHRBAHNSPEZIFISCHEN FESTSTELLBREMSEN EINES FAHRZEUGES**
METHOD AND ARRANGEMENT FOR APPLYING A PARKING BRAKE OF A VEHICLE DEPENDING ON THE ROADWAY CONDITIONS
PROCÉDÉ ET SYSTÈME POUR ACTIVER UN FREINAGE DE STATIONNEMENT D'UN VÉHICULE EN FONCTION DE LA CHAUSSÉE

(30) Priorität: 03.07.2007 DE 102007030780
(43) Veröffentlichungstag der Anmeldung: 24.03.2010
(73) Patentinhaber: Continental Automotive GmbH, 30165 Hannover (DE)
(72) Erfinder: BAIER-WELT, Christian, 64372 Ober-Ramstadt (DE); MOLFETTA, Damiano, 8623 Wetzikon (CH)
(86) Internationale Anmeldenummer: PCT/EP2008/058485
(87) Internationale Veröffentlichungsnummer: WO 2009/004022

(56) Entgegenhaltungen:
- EP-A- 1 026 060
- DE-A1- 10 238 870

## Beschreibung

Die Erfindung betrifft ein Verfahren sowie eine Anordnung zum fahrbahnspezifischen Feststellbremsen eines Fahrzeuges gemäß dem Oberbegriff von Patentanspruch 1 oder 14.

Ein elektromechanisches Bremssystem ist aus der EP 1026060A2 bekannt, und umfasst elektromechanische Aktuatoren die den Fahrzeugrädern zugeordnet sind, und eine Betriebsbremsfunktion ausführen. Unabhängig davon sind zusätzlich Feststellbremsen vorgesehen, welche von einem Zentralaktuator über ein Kabel betätigbar sind.

Die DE 102 38 870 A1 betrifft ein Verfahren zur Durchführung eines selbsttätigen Bremsvorgangs, und wobei nach Ablauf eines Haltezeitintervalls automatisch eine Feststellbremse betätigt, und eine Betriebsbremse gelöst wird.

Insbesondere zum Abstellen eines Fahrzeuges bei Vorliegen spezieller Untergrund- bzw. Fahrbahnverhältnisse, und zwar beispielsweise starker Steigung und/oder glatter Oberflächenbeschaffenheit der Fahrbahn, ist es erforderlich, dass durch eine geeignete automatische Ansteuerung der elektromechanischen Feststellbremse ein sicheres Abbremsen bzw. Abstellen des Fahrzeuges gewährleistet ist. Problematisch hierbei ist insbesondere die Übernahme der Brems- bzw. Haltefunktion von der elektromechanischen Betriebsbremse durch die elektromechanische Feststellbremse.

Aus der DE 102 51 025 ist bereits ein Bremssystem bekannt, welches eine Betriebsbremse und eine Feststellbremse aufweist und bei dem nach Aktivierung der Feststellbremse die zumindest an den Hinterrädern anliegende Betriebsbremskraft der Betriebsbremse erst dann gelöst wird, wenn die an den Hinterrädern anliegende Feststellbremskraft die erzeugte Betriebsbremskraft überschreitet. Typischerweise wird in derartigen Fällen bei einem zweiachsigen Fahrzeug mit einzelnen Betriebsbremseneinheiten an der Vorder- und Hinterachse, die Feststellbremskraft ausschließlich an der Hinterachse erzeugt, d.h. die erzeugte Feststellbremskraft wirkt ausschließlich auf die Hinterräder des Fahrzeuges. Bei einem an einer Steigung abgestellten Fahrzeug ist zum Halten des Fahrzeuges ein höheres Bremsmoment erforderlich. Um ein Wegrollen des Fahrzeuges zu vermeiden wird eine Betriebsbremskraft simuliert, welche ausschließlich an den Hinterrädern wirkt. Bei einer nicht ausreichenden Betriebsbremskraft kann der Fahrer durch Betätigung des Bremspedals die über die Betriebsbremse erzeugte Betriebsbremskraft an den Hinterrädern solange erhöhen, bis das Fahrzeug im Stillstand verharrt. Erst dann wird durch die Feststellbremse eine der Betriebsbremskraft betragsmäßig entsprechende Feststellbremskraft erzeugt, so dass die Betriebsbremse an den Hinterrädern schließlich gelöst werden kann.

Ferner ist aus der DE 103 51 026 ein Verfahren bekannt, bei dem abhängig von der Fahrzeugneigung eine Gesamt-Feststellbremskraft ermittelt wird, die die Summe der an den Rädern eines Fahrzeuges anliegenden Betriebebremskräfte überschreitet. Die Bremskraftverteilung wird über das Steuergerät des Bremssystems gesteuert, und zwar werden hierzu jeweils dieselben Summenkräfte eingestellt. Dies setzt jedoch voraus, dass die Reibkräfte zwischen dem jeweiligen Rad und dem Untergrund groß genug sind, um das Fahrzeug im Stillstand halten zu können. Insbesondere bei inhomogen verteilten Reibungsverhältnissen ("u-Sprung") besteht die Möglichkeit, dass solange das Fahrzeug noch von der Betriebsbremse gehalten wird, die Bremswirkung ausschließlich durch die Vorderräder aufgebracht wird, da sich die Hinterräder beispielsweise auf einem vereisten Untergrund befinden. Bei einer Bremskraftumverteilung nach obigem Schema würden dann zwar die für die Fahrzeugneigung korrekt ermittelten Gesamt-Feststellbremskräfte an den Hinterrädern mittels der Feststellbremse erzeugt, jedoch sind diese nicht ausreichend, um das Fahrzeug sicher halten zu können.

Darüber hinaus sind bereits Verfahren zur Ermittlung des maximalen Reibwertes an zumindest einem Rad eines stehenden Fahrzeugs bekannt, bei dem das Fahrzeug sich im Stillstand an einer Steigung oder Gefällstrecke befindet und mit einem Bewegungssensor ausgebildet ist. Über den Bewegungssensor wird ein Stillstand oder ein Bewegen des Rades bzw. des Fahrzeugs ermittelt. Ferner ist das Rad bzw. das Fahrzeug mit einer elektrisch steuerbaren Feststellbremse ausgerüstet, mit der die Bremskraft für das zu bremsende Rad einstellbar ist. Hierbei wird die Betriebsbremse oder die Feststellbremse kontinuierlich so weit gelöst, bis sich das Fahrzeug eine kurze Strecke bewegt. Während der Lösung der Bremse wird überprüft, ob wenigstens ein Rad blockiert und für das blockierte Rad ein maximaler Reibwert ermittelt.

Ausgehend vom beschriebenen Stand der Technik liegt der Erfindung die Aufgabe zugrunde, ein an einer Steigung oder Gefallstrecke befindliches Fahrzeug mittels einer zumindest eine Feststellbremsfunktion aufweisenden elektromechanischen Bremssystems ausreichend sicher abzubremsen und somit ein Wegrollen des Fahrzeugs zu verhindern. Die Aufgabe wird ausgehend vom Oberbegriff des Patentanspruches 1 oder 15 durch jeweils dessen kennzeichnende Merkmale gelöst.

Der wesentliche Aspekt des erfindungsgemäßen Verfahrens ergibt sich aus den kennzeichnenden Merkmalen vom Patentanspruch 1. Dies hat den Vorteil, dass nicht nur die Räder der Hinterachse, sondern alle Räder des Fahrzeuges über die elektromechanische Feststellbremse gebremst werden können. Mittels des erfindungsgemäßen Verfahrens zum fahrbahnspezifischen Feststellbremsen des Fahrzeuges kann durch eine vorteilhafte Verteilung der Bremskräfte abhängig von den vorliegenden Fahrbahnverhältnissen ein Fahrzeug beispielsweise durch Bremsen derjenigen Räder sicher abgestellt werden, welche einen ausreichenden Reibwert zum Halten des Fahrzeuges aufweisen. Hierdurch wird ein Bremsen von Rädern, die sich auf einem Untergrund mit einem geringen Reibwert, beispielsweise Glatteis befinden verhindert.

Weiterhin vorteilhaft werden die Beträge der gleichzeitig erzeugten Betriebsbremskräfte und Feststellbremskräfte derart gewählt, dass deren Summe zumindest eine vorgegebene Gesamtbremskraft nicht unterschreitet. Hierdurch wird sichergestellt, dass stets während der Übertragung der Bremsfunktion von den Betriebsbremsen auf die Feststellbremsen die zum Halten des Fahrzeuges an der Steigung bzw. dem Gefälle anliegenden Bremskräfte ausreichend sind.

In einer bevorzugten Variante der Erfindung wird der Betrag der an zwei achsweise, diagonal oder seitlich gegenüberliegenden Räder anliegenden Betriebsbremskräfte reduziert und gleichzeitig werden der betragsmäßigen Reduktion der Betriebsbremskräfte entsprechende Feststellbremskräfte an den weiteren zwei achsweise, diagonal oder seitlich gegenüberliegenden Rädern aufgebaut.

Der wesentliche Aspekt der erfindungsgemäßen Anordnung zur fahrbahnspezifischen Feststellbremsung eines Fahrzeuges ergibt sich aus den kennzeichnenden Merkmalen vom Patentanspruch 14.

Nachfolgend wird die Erfindung an einem Ausführungsbeispiel mittels der Figuren näher erläutert. Es zeigen:
- Figur 1: beispielhaft in vereinfachter Darstellung ein Blockschaltbild eines erfindungsgemäßen elektromechanischen Bremssystems,
- Figur 2: beispielhaft das erfindungsgemäße Verfahren zum fahrbahnspezifischen Feststellbremsen in einem Ablaufdiagramm,
- Figur 3: beispielhaft in einem Diagramm den zeitlichen Verlauf der Beträge der Betriebsbremskräfte und Feststellbremskräfte im Laufe des Übertragung von der jeweiligen Betriebsbremse auf die Feststellbremse.

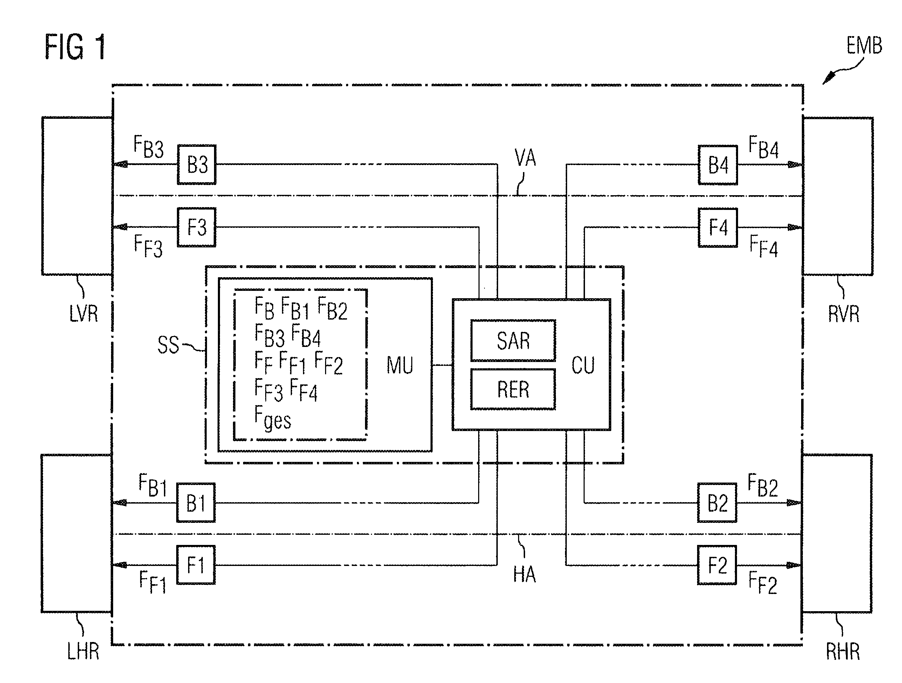

In Figur 1 ist beispielhaft in einem schematischen Blockschaltbild ein elektromechanisches Bremssystem EMB dargestellt, welches in einem Fahrzeug integriert ist. Das Fahrzeug weist beispielsweise zumindest vier Räder, und zwar ein linkes Vorderrad LVR, ein rechtes Vorderrad RVR, ein linkes Hinterrad LHR sowie ein rechtes Hinterrad RHR auf. Im Folgenden wird von einer Zuordnung des linken und rechten Vorderrades LVR, RVR zu einer Vorderachse VA und des linken und rechten Hinterrad LHR, RHR zu einer Hinterachse HA gesprochen, wobei die Vorder- bzw. Hinterachse VA, HA keine drehfeste Verbindung oder eine Starachse der jeweiligen Vorderräder LVR, RVR bzw. Hinterräder LHR, RHR bilden, sondern die Räumliche Anordnung der jeweiligen Räder LVR, RVR bzw. LHR, RHR zueinander innerhalb des Fahrzeuges angeben.

Das elektromechanische Bremssystem EMB weist beispielsweise ein integriertes Steuersystem SS auf, welches eine Steuereinheit CU und eine an diese angeschlossene Speichereinheit MU umfasst. An das Steuersystem SS sind mehrere jeweils radindividuell zugeordnete Einheiten bzw. Module des elektromechanischen Bremssystems EMB vorgesehen, welche unterschiedliche Bremsfunktionen, insbesondere eine Betriebsbremsfunktion sowie eine Feststellbremsfunktion bereitstellen.

Das elektromechanische Bremssystem EMB kann hierbei beispielsweise durch ein elektromechanisches Betriebsbremssystem und ein elektromechanisches Feststellbremssystem gebildet werden, die jeweils getrennt voneinander angeordnete bauliche Einheiten ausbilden.

Das elektromechanische Betriebsbremssystem weist hierbei beispielsweise eine erste bis vierte Betriebsbremse B1 - B4 und das elektromechanische Feststellbremssystem zumindest eine erste und zweite elektromechanische Feststellbremse F1, F2 auf, wobei die erste und zweite elektromechanische Feststellbremse F1, F2 üblicherweise an den Hinterrädern LHR, RHR des Fahrzeuges vorgesehen sind.

In einer bevorzugten Ausführungsform weist das Fahrzeug ein "kombiniertes" elektromechanisches Bremssystem EMB auf, bei dem sowohl an den Vorderrädern RVR, LVR als auch an den Hinterrädern LHR, RHR jeweils eine Betriebsbremse B1 - B4 und jeweils eine Feststellbremse F1 - F4 vorgesehen sind.

Im vorliegenden Ausführungsbeispiel gemäß Figur 1 ist dem linken Hinterrad LHR eine erste elektromechanische Betriebsbremse B1 sowie eine erste elektromechanische Feststellbremse F1, dem rechten Hinterrad RHR eine zweite elektromechanische Betriebsbremse B2 und eine zweite elektromechanische Feststellbremse F2, dem linken Vorderrad LVR eine dritte elektromechanische Betriebsbremse B3 und eine dritte elektromechanische Feststellbremse F3 sowie dem rechten Vorderrad RVR eine vierte elektromechanische Betriebsbremse B4 und eine vierte elektromechanische Feststellbremse F4 zugeordnet, welche über Verbindungsmittel, beispielsweise Verbindungsleitungen oder drahtlose Schnittstellen oder ein Bussystem an das Steuersystem SS angeschlossen sind. Die unterschiedlichen Betriebsbremsen B1 - B4 und Feststellbremsen F1 - F4 sind durch die Steuereinheit CU radindividuell und vorzugsweise unabhängig voneinander ansteuerbar. Die jeweils einem Rad LVR, RVR, LHR, RHR zugeordnete Betriebsbremse B1 - B4 und Feststellbremse F1 - F4 bilden bei einem kombinierten elektromechanischen Bremssystem EMB jeweils eine Einheit aus.

Durch die erste bis vierte elektromechanische Betriebsbremse B1 - B4 wird eine erste bis vierte Betriebsbremskraft F_{B1}-F_{B4} sowie durch die erste bis vierte elektromechanische Feststellbremse F1 - F4 eine erste bis vierte Feststellbremskraft F_{F1} - F_{F4} erzeugt. In einer bevorzugten Ausführungsform stimmen die erste bis vierte Betriebsbremskraft F_{B1} - F_{B4} und die erste bis vierte Feststellbremskraft F_{F1} - F_{F4} betragsmäßig überein und werden in den folgenden Ausführungen jeweils mit Betriebsbremskraft F_{B} bzw. Feststellbremskraft F_{F} bezeichnet.

Hierbei können beispielsweise die einer Radachse VA, HA zugeordneten Feststellbremsen F1, F2 bzw. F3, F4 bzw. Betriebsbremsen B1, B2 bzw. B3, B4 jeweils gemeinsam angesteuert werden, so dass an dem linken und rechten Vorderrad LVR, RVR bzw. am linken und rechten Hinterrad LHR, RHR jeweils annähernd dieselbe Betriebsbremskraft F_{B} bzw. Feststellbremskraft F_{F} anliegt. Die Erfindung ist jedoch keinesfalls auf derartige zweiachsige Fahrzeuge beschränkt. Vielmehr ist das erfindungsgemäße Konzept auch für Fahrzeuge mit mehreren elektromechanischen Bremssystemen und mit einer nahezu beliebigen Achszahl einsetzbar.

Ferner kann anstelle einer achsweisen ("Vorder-/Hinterachse") Ansteuerung alternativ eine diagonale ("rechtes Vorderrad + linkes Hinterrad" bzw. "linkes Vorderrad + rechtes Hinterrad") oder seitenweise ("links/rechts") Ansteuerung der ersten bis vierten Betriebsbremse B1 - B4 und/oder der Feststellbremse F1 - F4 erfolgen. Zur einfachen Erläuterung des erfindungsgemäßen Verfahrens wird im Folgenden die achsweise ("Vorder-/Hinterachse") Ansteuerung beispielhaft an einem zweiachsigen Fahrzeug beibehalten.

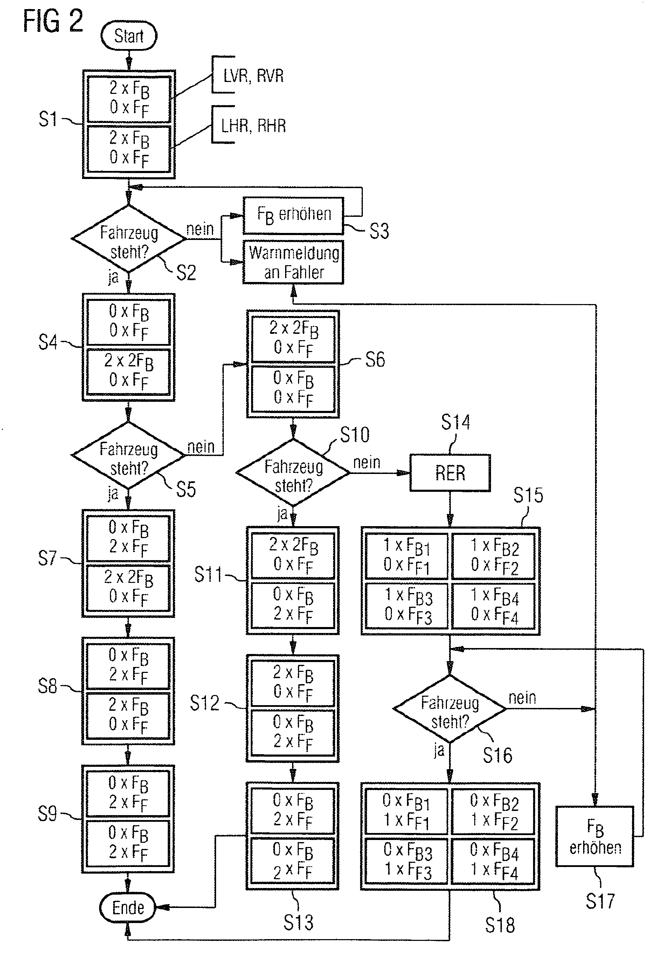

Zur Ansteuerung des elektromechanischen Bremssystems EMB ist in der Steuereinheit CU eine Steuer- und Auswerteroutine SAR vorgesehen, deren struktureller Aufbau beispielhaft mittels eines in Fig. 2 dargestellten Ablaufdiagrammes im Folgenden näher erläutert wird.

Dem dargestellten Ablaufdiagramm wird hierbei folgender Startzustand zugrunde gelegt: das Fahrzeug befindet sich an einer Steigung bzw. einem Gefälle mit unterschiedlichen Reibungsverhältnissen und wird zunächst mittels der ersten bis vierten Betriebsbremse B1 - B4 bis zum Stillstand abgebremst. Zum sicheren Abstellen des Fahrzeuges werden durch den Fahrer die elektromechanischen Feststellbremsen F1 - F4 über ein im Fahrzeug vorgesehenes Bedienelement betätigt. Hierzu wird das Fahrzeug zunächst über die erste bis vierte Betriebsbremse B1 - B4, die an allen Rädern LVR, RVR, LHR, RHR aktiv sind, gehalten. Überschreitet die pro Rad LVR, RVR, LHR, RHR erzeugte Betriebsbremskraft F_{B} die maximal durch die jeweilige Feststellbremse F1 - F4 erzeugbare Feststellkraft F_{F}, so kann beispielsweise der Betrag der jeweiligen Betriebsbremskraft F_{B} auf den jeweils maximal durch die jeweilige Feststellbremsen F1 - F4 erzeugbaren Betrag der Feststellbremskraft F_{F} reduziert werden.

Gemäß einem ersten Schritt S1 des in Fig. 2 dargestellten Verfahrens zur fahrbahnspezifischen Feststellbremsung eines im Stillstand befindlichen Fahrzeuges wird beim Start des Parkvorganges ausschließlich an den Vorderrädern LVR, RVR als auch an den Hinterrädern RHR, LHR die Betriebsbremskraft F_{B} erzeugt, d.h. es liegen keine Feststellkräfte F_{F} an den Vorderrädern LVR, RVR oder den Hinterrädern RHR, LHR an. Somit liegt an der Vorderachse VA bzw. der Hinterachse HA des Fahrzeuges jeweils der zweifache Betrag der Betriebsbremskraft 2 x F_{E} und keine Feststellkraft 0 x F_{F} an.

In einem zweiten Schritt S2 wird nun über geeignete im Fahrzeug vorgesehene Sensoreinheiten überprüft, ob das Fahrzeug steht. Hierzu können beispielsweise die im Fahrzeug vorgesehenen Drehimpulsgeber an den Vorderrädern LVR, RVR und/oder den Hinterräder RHR, LHR durch die Steuer- und Auswerteroutine SAR ausgewertet werden.

Befindet sich das Fahrzeug nicht im Stillstand, so wird in einem dritten Schritt S3 durch die Steuer- und Auswerteroutine SAR die jeweilige Betriebsbremskraft F_{B} erhöht und ggf. optional eine Warnmeldung an den Fahrer ausgegeben. Mittels der Warnmeldung wird der Fahrer darüber informiert, dass das Fahrzeug derzeitig unsicher geparkt ist und ggf. zum Wegrollen neigt. Die Ausgabe der Warnmeldung kann beispielsweise haptisch, akustisch und/oder optisch erfolgen, und zwar beispielsweise mittels einer Vibrationseinheit, Warnleuchteneinheit oder Sprachausgabeeinheit. Somit wird dem Fahrer der Bewegungszustand des Fahrzeuges angezeigt.

In einer bevorzugten Ausführungsform wird die jeweilige Betriebsbremskraft F_{B} an den Rädern LVR, RVR, RHR, LHR schrittweise um einen vorgegebenen Mindestbetrag erhöht und im Anschluss daran eine erneute Überprüfung des Betriebszustandes des Fahrzeuges gemäß dem zweiten Schritt S2 durchgeführt.

Wird der Stillstand des Fahrzeuges mittels der Steuer- und Auswerteroutine SAR im zweiten Schritt S2 festgestellt, so erfolgt in einem vierten Schritt S4 eine Umverteilung der zum Bremsen des Fahrzeuges erforderlichen Bremskräfte.

Hierbei wird beispielsweise die derzeit an den Vorderrädern LVR, RVR anliegende Betriebsbremskraft F_{B} langsam, und zwar schrittweise oder kontinuierlich reduziert und annähernd gleichzeitig die an den Hinterrädern LHR, RHR anliegende Betriebsbremskraft F_{E} entsprechend erhöht, so dass nach erfolgter Umverteilung der vierfache Betrag der Betriebsbremskraft 2 x 2F_{B} durch die erste und zweite, an den Hinterrädern LHR, RHR vorgesehenen Betriebsbremsen B1, B2 erzeugt wird, und zwar jeweils der doppelte Betrag der Betriebsbremskraft 2F_{B} pro rechten und linken Hinterrad LHR, RHR. Somit werden bei einem stehenden Fahrzeug an den beiden Hinterrädern LHR, RHR Betriebsbremskräfte 2 x 2F_{B} mit einem der Summe der zuvor an allen Rädern RVR, LVR, RHR, LHR anliegenden Betriebsbremskräfte 4 x F_{B} entsprechenden Betrag erzeugt. Die zum Bremsen des Fahrzeuges durch das elektromechanische Bremssystem EMB aufgebrachte Gesamtbremskraft F_{ges} entspricht daher dem vierfachen Betrag der Betriebsbremskraft 4 x F_{B} und bleibt somit betragsmäßig unverändert, jedoch wird diese ausschließlich durch die an der Hinterachse HA angeordneten erste und zweite elektromechanische Betriebsbremse B1, B2 erzeugt.

In einem fünften Schritt S5 wird erneut durch die Steuer- und Auswerteroutine SAR überprüft, ob das Fahrzeug sich weiterhin im Stillstand befindet. Hierdurch wird geprüft, ob eines der beiden Hinterräder LHR, RHR sich auf einem Untergrund mit geringem Reibwert, beispielsweise Glatteis befindet und somit die Verdopplung der Betriebsbremskräfte an den Hinterrädern LHR, RHR ggf. nicht ausreichend ist, um das Fahrzeug weiterhin sicher im Stillstand zu halten.

Reicht die am linken und rechten Hinterrad LHR, RHR aufgebrachte Betriebsbremskraft 2F_{B} jedoch nicht aus, um das Fahrzeug im Stillstand zu halten, so wird in einem sechsten Schritt S6 die Bremskräfte von der Hinterachse HA auf die Vorderachse VA verlagert. Hierzu wird beispielsweise am linken und rechten Vorderrad LVR, RVR mittels der dritten und vierten Betriebsbremse B3, B4 jeweils die doppelte Betriebsbremskraft 2 x 2F_{B} aufgebaut und die am linken und rechten Hinterrad LHR, RHR erzeugten Betriebsbremskräfte F_{B} abgebaut.

Ergibt die Überprüfung gemäß dem fünften Schritt S5, dass das Fahrzeug sich im Stillstand befindet, werden in einem siebten Schritt S7 Vorbereitungen für die Bremskraftumverteilung von den Betriebsbremsen B1 - B4 auf die Feststellbremsen F1 - F4 getroffen, und zwar wird zusätzlich zu dem vierfachen Betrag der Betriebsbremskraft 2 x 2F_{B} an der Hinterachse HA auch an der Vorderachse VA der zweifache Betrag der Feststellbremskraft 2 X F_{F} durch die dritte und vierte Feststellbremse F3, F4 erzeugt. Zu diesem Zeitpunkt steht zum Bremsen der Fahrzeuges somit kurzzeitig eine Gesamtbremskraft F_{ges} mit dem vierfachen Betrag der Betriebsbremskraft 4 x F_{B} und dem zweifachen Betrag der Feststellbremskraft 2 X F_{F} zur Verfügung.

In einem nachfolgenden achten Schritt S8 wird die an der Hinterachse HA erzeugte Betriebskraft 2 x 2F_{B} reduziert, und zwar beispielsweise auf den zweifachen Betrag der Betriebskraft 2 x F_{E}, so dass am linken und rechten Hinterrad LHR, RHR jeweils der einfache Betrag der Betriebskraft F_{B} anliegt. Somit wird das Fahrzeug über die erste und zweite Betriebsbremse B1, B2 und über die dritte und vierte Feststellbremse F3, F4 gehalten. Bei einem anhaltenden Stillstand des Fahrzeuges wird somit der Betrag der an den zumindest an den Hinterrädern LHR, RHR anliegenden Betriebsbremskräfte F_{B} reduziert und gleichzeitig der betragsmäßigen Reduktion der Betriebsbremskräfte F_{B} entsprechende Feststellbremskräfte F_{F} zumindest an den Vorderrädern RVR, LVR aufgebaut.

In einem neunten Schritt S9 wird die durch die erste und zweite Betriebsbremse B1, B2 an den Hinterrädern LHR, RHR erzeugte Betriebsbremskraft F_{B} reduziert und annähernd gleichzeitig jeweils an den an den Hinterrädern LHR, RHR über die erste und zweite Feststellbremse F1, F2 eine Feststellbremskraft F_{F} erzeugt, d.h. an der Hinterachse HA die erforderliche Bremskraft von den Betriebsbremsen B1, B2 auf die Feststellbremsen F1, F2 umverteilt. Somit ist eine schrittweise Umverteilung der zum Halten des Fahrzeugs im Stillstand erforderlichen Bremskraft, und zwar des vierfachen Betrages der jeweiligen Betriebs- bzw. Feststellbremskraft F_{B}, F_{F} von der ersten bis vierten Betriebsbremse B1 - B4 auf die erste bis vierte Feststellbremse F1 - F4 erfolgt. Das Fahrzeug ist sicher abgestellt und der Parkvorgang beendet.

Hierbei werden die an den einzelnen Rädern RVR, LVR, LHR, RHR anliegenden Feststellbremskräfte F_{F} beispielsweise derart verteilt, dass die Summe der Feststellbremskräfte F_{F}, d.h. der Gesamtbremskraft F_{ges} die Summe der Betriebsbremskräfte F_{B} nicht überschreitet.

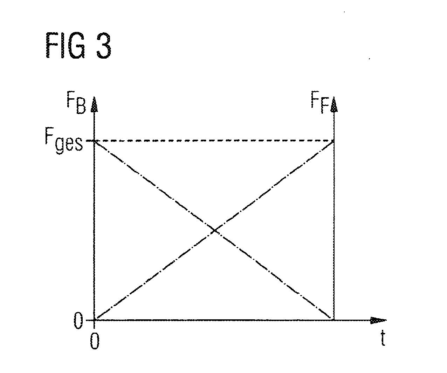

Beispielsweise kann die Umverteilung der Bremskräfte gemäß dem in Fig. 3 dargestellten Diagramm erfolgen. In dem Diagramm ist die sich aus der Summe der Betriebsbremskräfte F_{B} bzw. der Feststellbremskräfte F_{F} ergebende Gesamtbremskraft F_{ges} über der Zeit t aufgetragen.

Mittels der strichliert gezeichneten diagonal verlaufenden Linien wird die kontinuierliche Umverteilung der zum Bremsen des Fahrzeugs im Stillstand erforderlichen Gesamtbremskraft F_{ges} von der ersten bis vierten Betriebsbremse B1 - B4 auf die erste bis vierte Feststellbremse F1 - F4 dargestellt. Insbesondere wird die Betriebsbremskraft F_{B} in nahezu gleichem Maße reduziert, mit welchem die Feststellbremskraft F_{F} jeweils erhöht wird, wobei die Gesamtbremskraft F_{ges} dem vierfachen Betrag der Betriebsbremskraft F_{B} bzw. Feststellbremskraft F_{F} entspricht.

In einer vorteilhaften Ausgestaltung können der achte und neunte Schritt S8, S9 nahezu gleichzeitig durchgeführt werden, d.h. bereits bei einer Reduzierung der Betriebsbremskraft F_{B} an der Hinterachse HA kann der Aufbau der Feststellbremskraft F_{F} an der Hinterachse HA erfolgen.

Im Anschluss an den sechsten Schritt S6 wird in einem zehnten Schritt S10 überprüft, ob das Fahrzeug nach Umverteilung des vierfachen Betrages der Betriebsbremskraft 2 x 2FB an die Vorderachse VA des Fahrzeuges steht.

Hat die Umverteilung ein sicheres Abstellen des Fahrzeuges zufolge, so wird analog zum siebten bis neunten Schritt S7 - S9 die Bremskraft auf die Vorderachse VA und die Hinterachse HA annähernd gleichmäßig verteilt, welche jeweils durch die erste bis vierte Feststellbremse F1 - F4 bereitgestellt wird. Beispielsweise wird in einem elften Schritt S11 zunächst durch die erste und zweite Feststellbremse F1, F2 jeweils die Feststellbremskraft F_{F} aufgebaut und in einem nachfolgenden zwölften Schritt S12 die durch die dritte und vierte Betriebsbremse B3, B4 erzeugte Betriebsbremskraft F_{B} reduziert. Zeitgleich oder im Anschluss daran wird in einem dreizehnten Schritt S13 durch die dritte und vierte Feststellbremse F3, F4 jeweils die Feststellbremskraft F_{F} aufgebaut, d.h. das Fahrzeug wird nunmehr ausschließlich durch die erste bis vierte Feststellbremse F1 - F4 gehalten. Der Parkvorgang des Fahrzeuges ist wiederum beendet.

Wird durch geeignete Sensoreinheiten, beispielsweise an den Rädern LVR, RVR, LHR, RHR vorgesehene Drehimpulsgeber eine Bewegung des Fahrzeuges im zehnten Schritt S10 detektiert, so wird über die Steuer- und Auswerteroutine SAR in einem vierzehnten Schritt S14 eine Reibwertermittlungsroutine RER gestartet. Mittels der Reibwertermittlungsroutine RER werden die Reibwerte, insbesondere der maximale Reibwert pro Rad LVR, RVR, LHR, RHR ermittelt. Hierzu können unterschiedliche, an sich aus dem Stand der Technik bekannte Reibwertermittlungsverfahren vorgesehen werden.

Anschließend wird über die Auswerte- und Steuerroutine SAR die ermittelten Reibwerte, insbesondere maximalen Reibwerte pro Rad LVR, RVR, LHR, RHR ausgewertet. Abhängig von den ermittelten maximalen Reibwerten pro Rad LVR, RVR, LHR, RHR werden in einem fünfzehnten Schritt S15 radindividuell durch die erste bis vierte Betriebsbremse B1 - B4 die ggf. betragsmäßig unterschiedliche erste bis vierte Betriebsbremskraft F_{B1} - F_{B4} erzeugt, um einen Ausgleich der unterschiedlichen maximalen Reibwerte zu schaffen.

Im Anschluss daran wird in einem sechzehnten Schritt S16 überprüft, ob das Fahrzeug nach Anlegen der ersten bis vierten Betriebsbremskraft F_{B1} - F_{B4} sich im Stillstand befindet.

Sind die anliegenden Betriebsbremskräfte F_{B1} - F_{B4} nicht ausreichend, so wird analog zum dritten Schritt S3 in einem siebzehnten Schritt S17 die jeweilige Betriebsbremskraft F_{B1} - F_{B4} vorzugsweise schrittweise erhöht, und zwar solange bis sich das Fahrzeug im Stillstand befindet.

Ergibt die Überprüfung gemäß dem sechzehnten Schritt S16 ein Stehen des Fahrzeuges, so erfolgt in einem achtzehnten Schritt S18 eine Umverteilung der zum vollständigen Bremsen des Fahrzeuges erforderlichen Bremskraft von den Betriebsbremsen B1 - B4 auf die Feststellbremsen F1 - F4 gemäß den zuvor beschriebenen Verfahrensschritten. Unterschiedlich hierzu werden jedoch radindividuelle erste bis vierte Feststellbremskräfte F_{F1} - F_{F4} erzeugt, welche beispielsweise abhängig vom jeweils ermittelten maximalen Reibwert pro Rad LVR, RVR, LHR, RHR einen unterschiedlichen Betrag aufweisen können.

Die Reihenfolge der Umverteilung der Bremskräfte von der ersten bis vierten Betriebsbremse B1 - B4 auf die erste bis vierte Feststellbremse F1 - F4 kann beispielsweise gesteuert durch die Steuer- und Auswerteroutine SAR derart durchgeführt werden, dass die Umverteilung an dem den geringsten Reibwert aufweisende Rad LVR gestartet wird und im Anschluss daran die weiteren Räder RVR, LHR, RHR abhängig von dem jeweils zugeordneten Reibwert folgen.

Eine vorteilhafte Ausgestaltung sieht vor, dass während des Aktivierungsvorgangs der ersten bis vierten Feststellbremse F1 - F4 der Fahrer über den aktuellen Bremszustand, insbesondere die ermittelten Reibwerte beispielsweise anhand einer Grafikanzeige auf einer Displayeinheit im Fahrzeug informiert wird. Abhängig davon können durch einen manuellen Eingriff des Fahrers ggf. erforderliche Maßnahmen eingeleitet werden, wie beispielsweise die Wahl eines neuen Abstellplatzes.

Die Feststellbremsfunktion F1 - F4 des elektromechanischen Bremssystems EMB wird beispielsweise durch ein elektromechanisches Spindel- und/oder Kurvenscheibensystem bereitgestellt, mittels deren Zuspannkraft eine Sicherung des Fahrzeuges gegen Vorwärts- bzw. Rückwärtsrollen erfolgt.

Ein "kombiniertes" elektromechanisches Bremssystem EMB kann beispielsweise durch ein elektromechanisches Keilbremsensystem gebildet werden, welches pro Rad LVR, RVR, LHR, RHR jeweils eine elektromechanische Keilbremse mit Selbstverstärkungseinrichtung aufweist. Die vorzugsweise durch eine Keilanordnung gebildete Selbstverstärkungseinrichtung der Keilbremse wird zur Sicherung des Fahrzeuges gegen vorwärtiges oder rückwärtiges Wegrollen ausgenutzt. Die Feststellbremsfunktion in Vorwärtsrichtung wird hierbei durch die Selbstverstärkungseinrichtung zumindest einer Keilbremse übernommen, welche wenigstens eine Keilfläche aufweist, die zur Kraftverstärkung bei einer Bremsungen in Vorwärtsfahrt dient, wohingegen die Feststellbremsfunktion in Rückwärtsrichtung durch eine entsprechende Selbstverstärkungseinrichtung zumindest einer weiteren Keilbremse vorgenommen wird, die wenigstens eine weitere Keilfläche aufweist, die zur Kraftverstärkung bei einer Bremsungen in Rückwärtsfahrt dient.

Über die Steuer- und Auswerteroutine SAR bzw. die Reibwertermittlungsroutine RER können die Reibwerte der Räder LVR, RVR, LHR, RHR ermittelt werden und abhängig davon die Selbstverstärkungseinrichtungen der jeweils zugeordneten Keilbremsen angesteuert werden, um die sowohl gegen Vorwärts- als auch gegen Rückwärtsrollen wirkenden Mechanismen der Keilbremsen entsprechend auszunutzen. Somit könnten beispielsweise die an den Vorderrädern LVR, RVR vorgesehen Keilbremsen derart gesteuert werden, dass diese das Fahrzeug gegen ein Rückwärtsrollen bzw. "Bergabrollen" sichert, während die Hinterräder beispielsweise auf Glatteis stehen, indem der vierte bis sechste und zehnte bis dreizehnte Schritt S4 - S6, S10 - S13 gemäß Fig. 2 durchlaufen werden.

Die Ansteuerung der Keilbremsen zur Sicherung des Fahrzeuges gegen Vorwärts- bzw. Rückwärtsrollen erfolgt in Abhängigkeit vom Fahrzeugzustand und/oder diversen Umgebungsparameter wie beispielsweise der Steigung der Fahrbahn, der radindividuell ermittelten Reibwerte, der Beladung des Fahrzeuges, des Abstellortes (z.B. Duplex-Garagen, Fähren) und/oder der Temperatur. Hierbei werden die jeweiligen Keilbremsen derart angesteuert, dass noch eine ausreichende Kraftreserve zur ggf. Erhöhung der eingestellten Bremskraft vorhanden ist, um auch das Fahrzeug bei sich ändernden Umgebungsparametern ein sicheres Abstellen des Fahrzeuges gewährleisten zu können.

Die Erfindung wurde voranstehend an einem Ausführungsbeispiel beschrieben. Es versteht sich, dass Abwandlungen und Änderungen des erfindungsgemäßen Gegenstandes möglich sind, ohne dass hierdurch der Erfindungsgedanke verlassen wird.

### Bezugszeichenliste

- B1 - B4: erste bis vierte elektromech. Betriebsbremse
- CU: Steuereinheit
- EMB: elektromechanisches Bremssystem
- F1 - F4: erste bis vierte elektromech. Feststellbremse
- F_{B}: Betriebsbremskraft
- F_{B1} - F_{B4}: erste bis vierte Betriebsbremskraft
- F_{F}: Feststellbremskraft
- F_{F1} - F_{F4}: erste bis vierte Feststellbremskraft
- F_{ges}: Gesamtbremskraft
- HA: Hinterachse
- LHR: linkes Hinterrad
- LVR: linkes Vorderrad
- MU: Speichereinheit
- RER: Reibwerteermittlungsroutine
- RHR: rechtes Hinterrad
- RVR: rechtes Vorderrad
- S1 - S18: Verfahrensschritte
- SAR: Steuer- und Auswerteroutine
- SS: Steuersystem
- VA: Vorderachse

## Patentansprüche

1. Verfahren zur Feststellbremsung eines Fahrzeuges, bei dem zum Bremsen der Räder (RVR, LVR, RHR; LHR) des Fahrzeuges ein, eine Feststellbremsfunktion (F1 - F4) und eine Betriebsbremsfunktion (B1 - B4) aufweisendes elektromechanisches Bremssystem (EMB) vorgesehen ist, bei dem zum Abbremsen des Fahrzeuges in den Stillstand pro Rad (RVR, LVR, RHR, LHR) eine Betriebsbremskraft (F_{B}, F_{B1} - F_{B4}) erzeugt wird, wobei durch das elektromechanische Bremssystem (EMB) an zumindest zwei Rädern (RHR, LHR) des Fahrzeuges eine Feststellbremskraft (F_{F}, F_{F1} - F_{F4}) erzeugbar ist,
**dadurch gekennzeichnet,**
**dass** bei einem stehenden Fahrzeug an zumindest zwei der Räder (LHR, RHR) Betriebsbremskräfte (F_{B}) mit einem der Summe der an allen Rädern (RVR, LVR, RHR, LHR) anliegenden Betriebsbremskräfte (F_{B}) entsprechenden Betrag erzeugt werden,
**dass** der Stillstand des Fahrzeuges überprüft wird und
**dass** bei einem anhaltenden Stillstand des Fahrzeuges der Betrag der an den zumindest zwei Rädern (LHR, RHR) anliegenden Betriebsbremskräfte (F_{B}) reduziert wird und gleichzeitig der betragsmäßigen Reduktion der Betriebsbremskräfte (F_{B}) entsprechende Feststellbremskräfte (F_{F}) zumindest an den weiteren Rädern (RVR, LVR) aufgebaut werden, und dass die Feststellbremsfunktion (F1 - F4) des elektromechanischen Bremssystems (EMB) durch ein elektromechanisches Keilbremssystem bereitgestellt wird, mittels dessen Selbstverstärkungseinrichtung eine Sicherung des Fahrzeuges gegen Vorwärts- bzw. Rückwärtsrollen erfolgt.

2. Verfahren nach Anspruch 1,
**dadurch gekennzeichnet,**
**dass** die Beträge der gleichzeitig erzeugten Betriebsbremskräfte (F_{B}) und Feststellbremskräfte (F_{F}) derart gewählt werden, dass deren Summe zumindest eine vorgegebene Gesamtbremskraft (F_{ges}) nicht unterschreitet.

3. Verfahren nach Anspruch 1 oder 2,
**dadurch gekennzeichnet,**
**dass** der Betrag der Betriebsbremskräfte (F_{B}) und Feststellbremskräfte (F_{F}) schrittweise oder kontinuierlich reduziert bzw. aufgebaut wird.

4. Verfahren nach einem der Ansprüche 1 bis 3,
**dadurch gekennzeichnet,**
**dass** der Betrag der an zwei achsweise, diagonal oder seitlich gegenüberliegenden Räder (LVR, RVR) anliegenden Betriebsbremskräfte (F_{B}) reduziert wird und gleichzeitig der betragsmäßigen Reduktion der Betriebsbremskräfte (F_{B}) entsprechende Feststellbremskräfte (F_{F}) an den weiteren zwei achsweise, diagonal oder seitlich gegenüberliegenden Rädern (RHR, LHR) aufgebaut werden.

5. Verfahren nach Anspruch 4,
**dadurch gekennzeichnet,**
**dass** der Betrag der am linken und rechten Vorderrad (LVR, RVR) anliegenden Betriebsbremskräfte (F_{B}) reduziert wird und gleichzeitig der betragsmäßigen Reduktion der Betriebsbremskräfte (F_{B}) entsprechende Feststellbremskräfte (F_{F}) an dem linken und rechten Hinterrad (RHR, LHR) aufgebaut werden.

6. Verfahren nach Anspruch 4,
**dadurch gekennzeichnet,**
**dass** der Betrag der am linken und rechten Hinterrad (LHR, RHR) anliegenden Betriebsbremskräfte (F_{B}) reduziert wird und gleichzeitig der betragsmäßigen Reduktion der Betriebsbremskräfte (F_{B}) entsprechende Feststellbremskräfte (F_{F}) an dem linken und rechten Vorderrad (RVR, LVR) aufgebaut werden.

7. Verfahren nach einem der vorhergehenden Ansprüche,
**dadurch gekennzeichnet,**
**dass** bei einem nicht anhaltenden Stillstand des Fahrzeuges der Betrag der an den zumindest zwei Rädern (LHR, RHR) anliegenden Betriebsbremskräfte (F_{B}) reduziert wird und gleichzeitig der betragsmäßigen Reduktion der Betriebsbremskräfte (F_{B}) entsprechende Betriebsbremskräfte (F_{B}) an den weiteren Rädern (RVR, LVR) aufgebaut werden und der Stillstand des Fahrzeuges erneut überprüft wird.

8. Verfahren nach Anspruch 7,
**dadurch gekennzeichnet,**
**dass** bei einem weiterhin nicht anhaltenden Stillstand des Fahrzeuges die an den Rädern (RVR, LVR, RHR, LHR) vorliegenden maximalen Reibwerte ermittelt werden.

9. Verfahren nach Anspruch 8,
**dadurch gekennzeichnet,**
**dass** abhängig von den ermittelten maximalen Reibwerten jeweils eine radindividuelle Betriebsbremskraft (F_{B}, F_{B1} - F_{B4}) und/oder radindividuelle Feststellbremskraft (F_{F1} - F_{F4}) ermittelt wird, welche zum Abbremsen des jeweils zugeordneten Rades (RVR, LVR, RHR, LHR) erzeugt wird.

10. Verfahren nach Anspruch 9,
**dadurch gekennzeichnet,**
**dass** die Umverteilung der Bremskraft vom der radindividuellen Betriebsbremskraft (F_{B}, F_{B1} - F_{B4}) auf die radindividuelle Feststellbremskraft (F_{F1} - F_{F4}) bei dem den geringsten maximale Reibwert aufweisenden Rad (LVR) gestartet wird und die weiteren Räder (RVR, LHR, RHR) abhängig von Betrag des jeweils zugeordneten maximalen Reibwertes folgen.

11. Verfahren nach einem der vorhergehenden Ansprüche,
**dadurch gekennzeichnet,**
**dass** dem Fahrer der Bewegungszustand des Fahrzeuges angezeigt wird und eine Warnmeldung an den Fahrer ausgegeben, sofern das Fahrzeug unsicher geparkt ist bzw. zum Wegrollen neigt.

12. Verfahren nach Anspruch 1,
**dadurch gekennzeichnet, dass** das Keilbremssystem in Abhängigkeit vom Fahrzeugzustand und/oder diversen Umgebungs parameter wie beispielsweise der Steigung der Fahrbahn, der radindividuell ermittelten Reibwerte, der Beladung des Fahr zeuges, des Abstellortes (z.B. Duplex-Garagen, Fähren) und/oder der Temperatur angesteuert wird.

13. Verfahren nach einem der vorhergehenden Ansprüche,
**dadurch gekennzeichnet,**
**dass** zumindest die Feststellbremsfunktion (F1 - F4) des elektromechanischen Bremssystems (EMB) durch ein elektromechanisches Spindel- und/oder Kurvenscheibensystem bereitgestellt wird, mittels deren Zuspannkraft eine Sicherung des Fahrzeuges gegen Vorwärts- bzw. Rückwärtsrollen erfolgt.

14. Anordnung zur fahrbahnspezifischen Feststellbremsung eines Fahrzeuges bestehend aus einem eine Feststellbremsfunktion (F1 - F4) und eine Betriebsbremsfunktion (B1 - B4) aufweisenden elektromechanischen Bremssystem (EMB) mit einem Steuersystem SS, bei der zum Bremsen der Räder (RVR, LVR, RHR; LHR) des Fahrzeuges in den Stillstand pro Rad (RVR, LVR, RHR, LHR) eine Betriebsbremskraft (F_{B}, F_{B1} - F_{B4}) erzeugt wird, wobei durch das elektromechanische Bremssystem (EMB) an zumindest zwei Rädern (RHR, LHR) des Fahrzeuges eine Feststellbremskraft (F_{F}, F_{F1} - F_{F4}) erzeugbar ist,
**dadurch gekennzeichnet,**
**dass** bei einem stehenden Fahrzeug das elektromechanische Bremssystem (EMB) zur Erzeugung von Betriebsbremskräften (F_{B}) mit einem der Summe der an allen Rädern (RVR, LVR, RHR, LHR) anliegenden Betriebsbremskräften (F_{B}) entsprechenden Betrag an zumindest zwei der Räder (LHR, RHR) eingerichtet ist, dass das Steuersystem zur Überprüfung des Stillstandes des Fahrzeuges eingerichtet ist, wobei bei einem anhaltenden Stillstand des Fahrzeuges durch das Steuersystem (SS) das elektromechanische Bremssystem (EMB) derart angesteuert wird, dass der Betrag der an den zumindest zwei Rädern (LHR, RHR) anliegenden Betriebsbremskräfte (F_{B}) reduziert wird und gleichzeitig der betragsmäßigen Reduktion der Betriebsbremskräfte (F_{B}) entsprechende Feststellbremskräfte (F_{F}) zumindest an den weiteren Rädern (RVR, LVR) aufgebaut werden, und dass die Feststellbremsfunktion (F1 - F4) des elektromechanischen Bremssystems (EMB) durch ein elektromechanisches Keilbremssystem gebildet ist.

15. Anordnung nach Anspruch 14,
**dadurch gekennzeichnet, dass** zumindest die Feststell bremsfunktion (F1 - F4) des elektromechanischen Bremssystems (EMB) durch ein elektromechanisches Spindel- und/oder Kurven scheibensystem gebildet ist.

## Claims

1. Method for applying a parking brake of a vehicle, in which an electromechanical braking system (EMB) having a parking brake function (F1 - F4) and a service brake function (B1 - B4) is provided for braking the wheels (RVR, LVR, RHR, LHR) of the vehicle, in which a service brake force (F_{B}, F_{B1}-F_{B4}) is generated on each wheel (RVR, LVR, RHR, LHR) in order to brake the vehicle to a standstill, wherein a parking brake force (F_{F}, F_{F1} - F_{F4}) can be generated on at least two wheels (RHR, LHR) of the vehicle by the electromechanical braking system (EMB),
**characterised in that**
service brake forces (F_{B}) in a stationary vehicle are generated on at least two of the wheels (LHR, RHR), said forces having an amount corresponding to the total of the service brake forces (F_{B}) applied to all wheels (RVR, LVR, RHR, LHR), **in that** stopping of the vehicle is tested, and **in that** when the vehicle is maintained in the stop position, the amount of the service brake forces (F_{B}) applied to the at least two wheels (LHR, RHR) is reduced and, simultaneously, parking brake forces (F_{F}) corresponding to the reduction in service brake forces (F_{B}) are built up at least on the other wheels (RVR, LVR) and that the parking brake function (F1-F4) of the electromechanical braking system (EMB) is provided by an electromechanical wedge brake system, by means of the self-energising of which the vehicle is secured against rolling forwards or backwards

2. Method according to claim 1,
**characterised in that**
the amounts of the simultaneously generated service brake forces (F_{B}) and parking brake forces (F_{F}) are selected in such a way that their totals do not fall below at least a predefined total brake force (F_{ges}).

3. Method according to claim 1 or 2,
**characterised in that**
the amount of the service brake forces (F_{B}) and parking brake forces (F_{F}) are reduced or built up gradually or continuously.

4. Method according to any one of claims 1 to 3,
**characterised in that**
the amount of the service brake forces (F_{B}) applied to two axially, diagonally or laterally opposing wheels (LVR, RVR) is reduced and, simultaneously, parking brake forces (F_{F}) corresponding to the reduction in service brake forces (F_{B}) are built up on the other two axially, diagonally or laterally opposing wheels (RHR, LHR).

5. Method according to claim 4,
**characterised in that**
the amount of the service brake forces (F_{B}) applied to the left and right front wheels (LVR, RVR) is reduced and, simultaneously, parking brake forces (F_{F}) corresponding to the reduction in service brake forces (F_{B}) are built up on the left and right rear wheels (RHR, LHR).

6. Method according to claim 4,
**characterised in that**
the amount of the service brake forces (F_{B}) applied to the left and right rear wheels (LHR, RHR) is reduced and, simultaneously, parking brake forces (F_{F}) corresponding to the reduction in service brake forces (F_{B}) are built up on the left and right front wheels (RVR, LVR).

7. Method according to any one of the preceding claims,
**characterised in that**
when the vehicle is not maintained in the stop position, the amount of the service brake forces (F_{B}) applied to the at least two wheels (LHR, RHR) is reduced and, simultaneously, service brake forces (F_{B}) corresponding to the reduction in service brake forces (F_{B}) are built up on the other wheels (RVR, LVR) and stopping of the vehicle is tested again.

8. Method according to claim 7,
**characterised in that**
the maximum coefficients of friction on the wheels (RVR, LVR, RHR, LHR) are determined when the vehicle is still not maintained in the stop position.

9. Method according to claim 8,
**characterised in that**
a service brake force (F_{B}, F_{B1} - F_{B4}) specific to one wheel and/or a parking brake force (F_{F1} - F_{F4}) specific to one wheel, which is generated to brake the associated wheel (RVR, LVR, RHR, LHR) in each case, is respectively determined as a function of the determined maximum coefficients of friction.

10. Method according to claim 9,
**characterised in that**
redistribution of the brake force from the service brake force (F_{B}, F_{B1} - F_{B4}) specific to one wheel to the parking brake force (F_{F1} - F_{F4}) specific to one wheel starts with the wheel (LVR) having the lowest maximum coefficient of friction and the other wheels (RVR, LHR, RHR) follow as a function of the amount of the respectively associated maximum coefficient of friction.

11. Method according to any one of the preceding claims,
**characterised in that** the state of movement of the vehicle is displayed to the driver and an alarm is emitted to the driver if the vehicle is insecurely parked or is prone to roll away.

12. Method according to claim 1,
**characterised in that**
the wedge brake system is controlled as a function of the vehicle state and/or various ambient parameters, such as the gradient of the roadway, the coefficients of friction determined specific to one wheel, the loading of the vehicle, the parking location (for example duplex garages, ferries) and/or temperature.

13. Method according to any one of the preceding claims,
**characterised in that**
at least the parking brake function (F1 - F4) of the electromechanical braking system (EMB) is provided by an electromechanical spindle or cam disc system, by means of whose clamping force the vehicle is secured against rolling forwards or backwards.

14. Arrangement for applying a parking brake of a vehicle depending on the roadway conditions, consisting of an electromechanical braking system (EMB) comprising a parking brake function (F1 - F4) and a service brake function (B1 - B4), having a control system SS, in which a service brake force (F_{B}, F_{B1}-F_{B4}) is generated on each wheel (RVR, LVR, RHR, LHR) in order to brake the wheels (RVR, LVR, RHR, LHR) of the vehicle to a standstill, wherein a parking brake force (F_{F}, F_{F1}-F_{F4}) can be generated on at least two wheels (RHR, LHR) of the vehicle by the electromechanical braking system (EMB), **characterised in that**
when a vehicle is stationary the electromechanical braking system (EMB) is arranged to generate service brake forces (F_{B}) on at least two of the wheels (LHR, RHR), said forces having an amount corresponding to the total of the service brake forces (F_{B}) applied to all wheels (RVR, LVR, RHR, LHR),
**in that** the control system is arranged to test stopping of the vehicle, wherein when the vehicle is maintained in the stop position by the control system (SS) the electromechanical braking system (EMB) is controlled in such a way that the amount of the service brake forces (F_{B}) applied to the at least two wheels (LHR, RHR) is reduced and, simultaneously, parking brake forces (F_{F}) corresponding to the reduction in service brake forces (F_{B}) are built up at least on the other wheels (RVR, LVR) and that the parking brake function (F1-F4) of the electromechanical braking system (EMB) is formed by an electromechanical wedge brake system.

15. Arrangement according to claim 14,
**characterised in that**
at least the parking brake function (F1 - F4) of the electromechanical braking system (EMB) is formed by an electromechanical spindle and/or cam disc system.

## Revendications

1. Procédé de freinage de stationnement d'un véhicule, dans lequel, pour freiner les roues (RVR, LVR, RHR ; LHR) du véhicule, il est prévu un système de frein électromécanique (EMB) présentant une fonction de freinage de stationnement (F1 à F4) et une fonction de freinage de service (B1 à B4), dans lequel une force de freinage de service (F_{B}, F_{B1} à F_{B4}) est générée pour le freinage du véhicule à l'arrêt par roue (RVR, LVR, RHR, LHR), dans lequel une force de freinage de stationnement (F_{F}, F_{F1} à F_{F4}) peut être générée par le système de frein électromécanique (EMB) sur au moins deux roues (RHR, LHR) du véhicule, **caractérisé en ce que**,
dans le cas d'un véhicule à l'arrêt, des forces de freinage de service (F_{B}) avec une contribution correspondant à la somme des forces de freinage de service (F_{B}) appliquées à toutes les roues (RVR, LVR, RHR, LHR) sont générées sur au moins deux des roues (LHR, RHR), **en ce que** l'arrêt du véhicule est vérifié, et **en ce que**, dans le cas d'un arrêt prolongé du véhicule, la contribution des forces de freinage de service (F_{B}) appliquées aux au moins deux roues (LHR, RHR) est réduite et, en même temps, des forces de freinage de stationnement (F_{F}) correspondant à la réduction de la contribution des forces de freinage de service (F_{B}) s'appliquent au moins aux autres roues (RVR, LVR), et **en ce que** la fonction de freinage de stationnement (F1 à F4) du système de frein électromécanique (EMB) est fournie par un système de frein à coin électromécanique, au moyen du dispositif autorenforçateur duquel il s'établit une sécurisation du véhicule contre un roulement en avant ou en arrière.

2. Procédé selon la revendication 1,
**caractérisé en ce que**
les contributions des forces de freinage de service (F_{B}) et des forces de freinage de stationnement (F_{F}) générées en même temps sont choisies de telle sorte que leur somme ne se situe pas en dessous d'au moins une force de freinage totale (F_{ges}) prédéfinie.

3. Procédé selon la revendication 1 ou 2, cara
ctérisé en ce que
la contribution des forces de freinage de service (F_{B}) et des forces de freinage de stationnement (F_{F}) est réduite ou établie par paliers ou en continu.

4. Procédé selon l'une quelconque des revendications 1 à 3,
**caractérisé en ce que**
la contribution des forces de freinage de service (F_{B}) appliquées à deux roues (LVR, RVR) axialement, diagonalement ou latéralement opposées est réduite et en même temps, en réponse à cette réduction quantitative des forces de freinage de service (F_{B}), des forces de freinage de stationnement (F_{F}) correspondantes sont établies sur les deux autres roues (RHR, LHR) axialement, diagonalement ou latéralement opposées.

5. Procédé selon la revendication 4,
**caractérisé en ce que**
la contribution des forces de freinage de service (F_{B}) appliquées à la roue avant gauche et à la roue avant droite (LVR, RVR) est réduite et, en même temps, en réponse à cette réduction quantitative des forces de freinage de service (F_{B}), des forces de freinage de stationnement (F_{F}) correspondantes sont établies sur la roue arrière gauche et la roue arrière droite (RHR, LHR).

6. Procédé selon la revendication 4,
**caractérisé en ce que**
la contribution des forces de freinage de service (F_{B}) appliquées à la roue arrière gauche et à la roue arrière droite (LHR, RHR) est réduite et, en même temps, en réponse à cette réduction quantitative des forces de freinage de service (F_{B}), des forces de freinage de stationnement (F_{F}) correspondantes sont établies sur la roue avant gauche et la roue avant droite (RVR, LVR).

7. Procédé selon l'une quelconque des revendications précédentes,
**caractérisé en ce que**,
dans le cas d'un arrêt non prolongé du véhicule, la contribution des forces de freinage de service (F_{B}) appliquées aux au moins deux roues (LHR, RHR) est réduite et, en même temps, en réponse à cette réduction quantitative des forces de freinage de service (F_{B}), des forces de freinage de service (F_{B}) correspondantes sont établies sur les autres roues (RVR, LVR) et l'arrêt du véhicule est à nouveau vérifié.

8. Procédé selon la revendication 7,
**caractérisé en ce que**,
dans le cas d'un arrêt du véhicule demeurant par la suite non prolongé, les coefficients de frottement maximaux présents sur les roues (RVR, LVR, RHR, LHR) sont déterminés.

9. Procédé selon la revendication 8,
**caractérisé en ce que**,
en fonction des coefficients de frottement maximaux déterminés, il est déterminé respectivement une force de freinage de service individuelle par roue (F_{B}, F_{B1} à F_{B4}) et/ou une force de freinage de stationnement individuelle par roue (F_{F1} à F_{F4}), qui est générée pour freiner la roue (RVR, LVR, RHR, LHR) respectivement affectée.

10. Procédé selon la revendication 9,
**caractérisé en ce que**
la redistribution de la force de freinage de la force de freinage de service (F_{B}, F_{B1} à F_{B4}) individuelle par roue vers la force de freinage de stationnement (F_{F1} à F_{F4}) individuelle par roue est lancée avec la roue (LVR) présentant le coefficient de frottement maximal le plus faible, et les autres roues (RVR, LHR, RHR) suivent en fonction de la valeur du coefficient de frottement maximal respectivement affecté.

11. Procédé selon l'une quelconque des revendications précédentes,
**caractérisé en ce que**
l'état de mouvement du véhicule est indiqué au conducteur et un message d'avertissement lui est délivré pour autant que le véhicule soit stationné de manière non sécurisée ou tende à partir en roulant.

12. Procédé selon la revendication 1,
**caractérisé en ce que**
le système de frein à coin est commandé en fonction de l'état du véhicule et/ou de divers paramètres environnementaux, tels que l'inclinaison de la chaussée, les coefficients de frottement déterminés individuellement par roue, la charge du véhicule, le lieu de garage (par exemple, garages en duplex, bacs) et/ou la température.

13. Procédé selon l'une quelconque des revendications précédentes,
**caractérisé en ce que**
au moins la fonction de freinage de stationnement (F1 à F4) du système de frein électromécanique (EMB) est fournie par un système électromécanique de broches et/ou de cames, au moyen de la force de serrage duquel s'établit une sécurisation du véhicule contre un roulement en avant ou en arrière.

14. Agencement pour un freinage de stationnement, spécifique à la chaussée, d'un véhicule, constitué d'un système de frein électromécanique (EMB) présentant une fonction de freinage de stationnement (F1 à F4) et une fonction de freinage de service (B1 à B4) avec un système de commande SS, dans lequel une force de freinage de service (F_{B}, F_{B1} à F_{B4}) est générée pour le freinage des roues (RVR, LVR, RHR ; LHR) du véhicule à l'arrêt par roue (RVR, LVR, RHR, LHR), dans lequel une force de freinage de stationnement (F_{F}, F_{F1} à F_{F4}) peut être générée par le système de frein électromécanique (EMB) sur au moins deux roues (RHR, LHR) du véhicule,
**caractérisé en ce que**,
dans le cas d'un véhicule à l'arrêt, le système de frein électromécanique (EMB) est agencé pour générer des forces de freinage de service (F_{B}) avec une contribution correspondant à la somme des forces de freinage de service (F_{B}) appliquées à toutes les roues (RVR, LVR, RHR, LHR) sur au moins deux des roues (LHR, RHR), **en ce que** le système de commande est agencé pour vérifier l'arrêt du véhicule, dans lequel, dans le cas d'un arrêt prolongé du véhicule, le système de frein électromécanique (EMB) est commandé par le système de commande (SS) de sorte que la contribution des forces de freinage de service (F_{B}) appliquées aux au moins deux roues (LHR, RHR) soit réduite et qu'en même temps, en réponse à cette réduction quantitative des forces de freinage de service (F_{B}), des forces de freinage de stationnement (F_{F}) correspondantes soient établies au moins sur les autres roues (RVR, LVR), et **en ce que** la fonction de freinage de stationnement (F1 à F4) du système de freinage électromécanique (EMB) est formée par un système de frein à coin électromécanique.

15. Agencement selon la revendication 14, cara
ctérisé en ce que
au moins la fonction de freinage de stationnement (F1 à F4) du système de frein électromécanique (EMB) est formée par un système électromécanique de broches et/ou de cames.
